(19) Europäisches Patentamt / European Patent Office / Office européen des brevets

(11) EP 4 318 665 A1

(12) **EUROPEAN PATENT APPLICATION**
published in accordance with Art. 153(4) EPC

(43) Date of publication:
**07.02.2024 Bulletin 2024/06**

(21) Application number: 22781626.1

(22) Date of filing: **30.03.2022**

(51) International Patent Classification (IPC):
**H01M 4/525** (2010.01)   **H01M 4/505** (2010.01)
**H01M 4/36** (2006.01)   **H01M 4/62** (2006.01)
**H01M 10/052** (2010.01)   **H01M 4/02** (2006.01)

(52) Cooperative Patent Classification (CPC):
**H01M 4/02; H01M 4/36; H01M 4/505; H01M 4/525;
H01M 4/62; H01M 10/052;** Y02E 60/10

(86) International application number:
**PCT/KR2022/004548**

(87) International publication number:
**WO 2022/211507 (06.10.2022 Gazette 2022/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.03.2021 KR 20210041373**

(71) Applicants:
• **POSCO Holdings Inc.**
  **Seoul 06194 (KR)**
• **RESEARCH INSTITUTE OF INDUSTRIAL
  SCIENCE &
  TECHNOLOGY
  Pohang-si, Gyeongsangbuk-do 37673 (KR)**

• **POSCO Chemical Co., Ltd
  Gyeongsangbuk-do 37918 (KR)**

(72) Inventors:
• **NAM, Sang Cheol
  Seoul 02587 (KR)**
• **CHOI, Kwon Young
  Seoul 07987 (KR)**
• **SONG, Jung Hoon
  Gwacheon-si, Gyeonggi-do 13835 (KR)**
• **LEE, Sanghyuk
  Incheon 22405 (KR)**

(74) Representative: **Potter Clarkson
  Chapel Quarter
  Mount Street
  Nottingham NG1 6HQ (GB)**

(54) **POSITIVE ELECTRODE ACTIVE MATERIAL FOR LITHIUM SECONDARY BATTERY AND LITHIUM SECONDARY BATTERY COMPRISING SAME**

(57) The present exemplary embodiments relate to positive electrode active materials. The positive electrode active material according to an exemplary embodiment is a metal oxide particle including a center and a surface portion positioned on the surface of the center, where the metal oxide particle includes nickel, cobalt, manganese, and doping elements, and is composed of single particles, and the doping elements include two or more species selected from the group consisting of Zr, Al, B, P, La, Ta, Ti, W, Mo, Si, Ga, Zn, Nb, Ag, Sn, Bi, Au, Y, Ge, V, Cr, and Fe.

【FIG. 1】

EP 4 318 665 A1

**Description**

## BACKGROUND OF THE INVENTION

**(a) Field of the Invention**

The present exemplary embodiments relate to a positive electrode active material and a lithium secondary battery including the same.

**(b) Description of the Related Art**

Recently, due to the explosive demand for electric vehicles and the demand for increased mileage, the development of secondary batteries with high-capacity and a high energy density that can be applied to them is actively progressing worldwide.

In order to meet these requirements, NCM positive electrode material with high Ni content is used, but in order to improve the density of the electrode plate, a secondary battery using a bimodal positive electrode active material in which large and small particles are mixed in a certain proportion is used.

However, the positive electrode material composed of secondary particles in which primary particles are agglomerated has a large specific surface area of the powder, so the area in contact with the electrolyte solution is large, so there is a high possibility of gas generation and the resulting problem of cycle-life deterioration.

In addition, because the strength of secondary particles is weak, there is a problem that small particles break into primary particles during the rolling process, which also causes the cycle-life characteristic to deteriorate.

To solve this problem, a method of increasing the size of the primary particle has been proposed.

However, the primary particle whose size is increased in this way is not easy to disintegrate because the cake strength increases. In addition, even after disintegration, there is a problem of particle uniformity being deteriorated because a large amount of fine and coarse particles is present.

Therefore, the development of technology that can improve particle uniformity while increasing the size of the primary particle is required.

## SUMMARY OF THE INVENTION

In the present exemplary embodiment, the present exemplary embodiment seeks to provide a positive electrode active material with excellent particle uniformity and particle strength due to the presence of trace amounts of fine and coarse particles.

The positive electrode active material according to an exemplary embodiment is a metal oxide particle including a center and a surface portion positioned on the surface of the center, where the metal oxide particle includes nickel, cobalt, manganese, and doping elements, and is composed of single particles, and the doping elements may include Zr and Al.

The content of the doping element may range from 0.0005 mole to 0.04 mole, based on 1 mole of the total of the nickel, cobalt, manganese, and doping elements.

At this time, the content of the Zr may range from 0.001 mole to 0.01 mole, based on 1 mole of the total of the nickel, cobalt, manganese, and doping elements.

The content of the Al may range from 0.001 mole to 0.04 mole, based on 1 mole of the total of the nickel, cobalt, manganese and doping elements.

The content of nickel in the metal oxide particle may be 0.8 mol or more, based on 1 mole of the total of the nickel, cobalt, and manganese.

In the present exemplary embodiment, the surface portion of the metal oxide particle may include a film in which no peak is observed during XRD measurement.

The film may contain a compound with an amorphous structure.

At this time, the amorphous structure compound may include carbon and lithium.

The surface portion may include an amorphous structure and a rock salt structure.

The center portion may contain a layered structure.

A particle strength of the metal oxide particle may be more than 291 MPa.

A grain size of the metal oxide particle may range from 2,500 Å to 5,000 Å.

The specific surface area (BET) of the metal oxide particle may be less than 0.7 $m^2$/g.

Based on the entire positive electrode active material, the ratio of particles with an average particle size of 2 $\mu$m or less may be less than 2.5%.

Based on the entire positive electrode active material, the ratio of particles with an average particle diameter

of 10 μm or more may be less than 3%.

D50 particle size of the metal oxide particle may be 5.5 μm or less.

[Advantageous Effects]

The positive electrode active material according to an exemplary embodiment is composed of single particles containing two types of doping elements. Accordingly, disintegration is very easy, so there are almost no fine and coarse particles, and thus particle uniformity is very excellent.

In addition, because the positive electrode active material has very high particle strength, the rolling rate can be increased when forming an electrode, and as a result, a lithium secondary battery with high energy density can be implemented.

In addition, when the positive electrode active material is applied, the cycle-life of the lithium secondary battery is increased, the resistance increase rate is low, and thermal stability can be improved.

## BRIEF DESCRIPTION OF THE DRAWINGS

FIG. 1 is a schematic diagram to explain the manufacturing method of a positive electrode active material composed of single particles according to an exemplary embodiment.

FIG. 2 schematically shows the manufacturing method of a conventional positive electrode active material composed of single particles.

FIG. 3A is the SEM analysis result measured at x10,000 times the positive electrode active material of exemplary embodiment 1.

FIG. 3B is the SEM analysis result measured at x1,000 times the positive electrode active material of exemplary embodiment 1.

FIG. 4 is the SEM analysis result measured at x1,000 times the positive electrode active material of Comparative Example 2.

FIG. 5 is the image measurement result using HRTEM (High resolution transmission electron microscope) equipment for the positive electrode active material manufactured according to exemplary embodiment 1.

FIG. 6 is an image of the diffraction pattern is shown by FFT (Fast Fourier transform) transformation of the area A in Fig. 5.

FIG. 7 is an image of the diffraction pattern is shown by FFT (Fast Fourier transform) transformation of the B area in FIG. 5.

FIG. 8 is an image of the diffraction pattern is shown by FFT (Fast Fourier transform) transformation of the C area in FIG. 5.

FIG. 9 is the image measurement result using HRTEM (High resolution transmission electron microscope) equipment for the positive electrode active material manufactured according to Comparative Example 1.

FIG. 10 is an image of the diffraction pattern is shown by FFT (Fast Fourier transform) transformation of the A area of FIG. 9.

FIG. 11 is an image of the diffraction pattern is shown by FFT (Fast Fourier transform) transformation of the B area in FIG. 9.

FIG. 12 shows a cross-section image of the positive electrode active material manufactured in exemplary embodiment 1 after milling it with FIB.

FIG. 13 to FIG. 17 shows the results of element mapping analysis for the positive electrode active material manufactured according to exemplary embodiment 1 by element.

FIG. 18 shows the results of cross-section analysis using STEM analysis equipment for the positive electrode active material manufactured according to exemplary embodiment 1.

FIG. 19 shows the EELS analysis results for area A in FIG. 15.

FIG. 20 shows the EELS analysis results for area B in FIG. 15.

FIG. 21 shows the EELS analysis results for the C area in FIG. 15.

## DETAILED DESCRIPTION OF THE EMBODIMENTS

The terms such as first, second, and third are used to describe various portions, components, regions, layers, and/or sections, but various parts, components, regions, layers, and/or sections are not limited to these terms. These terms are only used to distinguish one part, component, region, layer, or section from another part, component, region, layer, or section. Accordingly, a first part, component, region, layer, or section described below may be referred to as a second part, component, region, layer, or section without departing from the scope of the present invention.

Terminologies as used herein are to mention only a specific exemplary embodiment, and are not to limit the present invention. Singular forms used herein include plural forms as long as phrases do not clearly indicate an opposite meaning. The term "including/comprising/containing" as used herein concretely indicates specific characteristics, regions, integer numbers, steps, operations, elements, and/or components, and is not to exclude presence or addition of other specific characteristics, regions, integer numbers, steps, operations, elements, and/or components.

When any portion is referred to as being "above" or "on" another portion, any portion may be directly above or on another portion or be above or on another portion with the other portion interposed therebetween. In contrast, when any portion is referred to as being "directly on" another portion, the other portion is not interposed between any portion and another portion.

Unless defined otherwise, all terms including technical terms and scientific terms as used herein have the same meaning as the meaning generally understood by a person of an ordinary skill in the art to which the present invention pertains. Terms defined in a generally used dictionary are additionally interpreted as having the meaning matched to the related art d°Cument and the currently disclosed contents and are not interpreted as ideal or formal meaning unless defined.

The positive electrode active material according to an exemplary embodiment is a metal oxide particle including a center and a surface portion positioned on the surface of the center, where the metal oxide particle includes nickel, cobalt, manganese, and doping elements, and is composed of single particles, and the doping elements may include Zr and Al.

At this time, the content of the doping element may range from 0.0005 mole to 0.04 mole or 0.001 mole to 0.03 mole, based on 1 mole of the total of the nickel, cobalt, manganese, and doping elements. At this time, the doping element refers to the doping amount of the doping element contained in the finally obtained positive electrode active material.

In positive electrode active materials, selection of doping elements is important to ensure cycle-life and various electrochemical performances. In the present exemplary embodiment, the characteristics of the positive electrode active material can be improved by applying various doping elements as described above.

Specifically, $Zr^{4+}$ serves as a kind of pillar because Zr ion occupies the Li site, and it relieves the contraction of the lithium ion path during the charging and discharging process to bring about stabilization of the layered structure. This phenomenon can increase cycle-life by reducing cation mixing and increasing lithium diffusion coefficient.

In addition, Al ions move to the tetragonal lattice site, suppressing the deterioration of the layered structure into a spinel structure in which the movement of lithium ions is relatively difficult.

The content of the Zr ranges from 0.001 mole to 0.01 mole, more specifically, 0.0016 mole to 0.0064 mole, 0.0017 mole to 0.0055 mole or 0.002 mole to 0.005 mole, based on 1 mole of the total of the nickel, cobalt, manganese and doping elements. It can be a mole range. When the Zr doping amount satisfies the range, the high temperature resistance increase rate can be reduced and simultaneously excellent cycle-life characteristics can be secured.

The Al content ranges from 0.001 mole to 0.04 mole, more specifically, 0.004 mole to 0.028 mole, 0.0045 mole to 0.027 mole or 0.0055 mole to 0.025 mole, based on 1 mole of the total of the nickel, cobalt, manganese and doping elements. It can be a mole range. If the Al doping amount satisfies the range, high temperature cycle-life and thermal stability can be further improved.

The content of nickel in the metal oxide particle of the present exemplary embodiment may be 0.8 mole or more, based on 1 mole of the nickel, cobalt, and manganese. More specifically, the nickel content may range from 0.8 to 0.99, 0.85 to 0.99, and 0.88 to 0.99.

As in the present exemplary embodiment, when the content of nickel among the metals in lithium metal oxide is 80% or more, a positive electrode active material with a high power characteristic can be implemented. The positive electrode active material of the present exemplary embodiment with this composition has a higher energy density per volume, so it can improve the capacity of the battery to which it is applied, and is also very suitable for use in electric vehicles.

Meanwhile, the positive electrode active material is a metal oxide particle that includes a center and a surface portion positioned on the surface of the center. The metal oxide particle is composed of single particles, and the surface portion may include a film where no peak is observed during XRD measurement.

In the metal oxide particle, the surface portion refers to the area corresponding to 1 nm to 30 nm depth, from the metal oxide particle outermost surface toward the center.

A film formed in the shape of an island can be positioned on the surface.

The film may contain a compound with an amorphous structure. More specifically, the amorphous structure of the compound may include carbon and lithium.

In the metal oxide particle of the present exemplary embodiment, the center portion may include a layered structure, and the surface portion may include an amorphous structure and a rock salt structure. That is, the surface portion may include a mixed structure of amorphous structure and a rock salt structure.

The metal oxide particle is composed of a single particle. In this specification, a single particle may refer to a primary particle, or it may refer to a form in which the size is increased by combining several primary particles with small average particle diameters.

The positive electrode active material of the present exemplary embodiment has a ratio of particles with an average particle size of 2 μm or less, of 2.5% or less, more specifically, 0.1% to 2.5%, 0.1% to 2.3%, 0.2%, based on the entire positive electrode active material. It can range from % to 2%, or 0.2% to 1.5%.

Additionally, the ratio of particles with an average particle diameter of 10 μm or more, may be 3% or less, more specifically in the range of 0.2% to 3%, 0.2% to 2.8%, or 0.3% to 2.7%.

D50 particle size of the metal oxide particle may be 5.5 μm or less, more specifically 3.5 μm to 5.5 μm, 3.5 μm to 5.3 μm, 3.7 μm to 5 μm, or 3.7 μm to 4.8 μm.

In the present exemplary embodiment, the size of the primary particle can be increased to prevent the performance of the NCM positive electrode active material with high nickel content from being deteriorated. At this time, a general disintegration device can be used without an expensive disintegration equipment or multiple disintegration processes. As a result, it is possible to provide a positive electrode active material with a uniform particle size distribution which has trace amounts of fine and coarse particles.

Therefore, if the ratio of particles with an average particle size of 2μm or less and particles with an average particle size of 10μm or more satisfies the range and simultaneously the D50 particle size of the metal oxide particle satisfies the range, a positive electrode active material with excellent electrochemical characteristics can be implemented.

In the present exemplary embodiment, the particle strength of the metal oxide particle may be 291 MPa or more, more specifically 291 MPa to 450 MPa, 300 MPa to 450 MPa, 305 MPa to 400 MPa, or 315 MPa to 400 MPa. If the particle strength is over 300MPa, the rolling rate can be further improved when manufacturing electrodes using the positive electrode active material. Accordingly, a lithium secondary battery with excellent energy density can be implemented.

Additionally, the grain size of the metal oxide particle may be in the 2,500 Å to 5,000 Å range, more specifically in the 2,600 Å to 4,900 Å, 2,650 Å to 4,800 Å, or 2,900 Å to 4,800 Å range. If the grain size satisfies the range, the content of residual lithium can be reduced and the cycle-life characteristic of the battery can be improved.

The specific surface area (BET) of the metal oxide particle is 0.7 m$^2$/g or less, more specifically 0.35 m$^2$/g to 0.70 m$^2$/g, 0.40 m$^2$/g to 0.67 m$^2$/g, 0.43 m$^2$/g to 0.65 m$^2$/g, 0.45 m$^2$/g to 0.63 m$^2$/g, or 0.47 m$^2$/g to 0.61 m$^2$/g. If the BET value satisfies the range, implementing a battery using this has a very advantageous effect because the amount of gas generated can be significantly deteriorated during charging and discharging.

The positive electrode active material according to an exemplary embodiment, can be manufactured through a manufacturing method that includes the steps of:
preparing a metal salt aqueous solution containing a nickel raw material, a cobalt raw material, a manganese raw material, and water, supplying the metal salt aqueous solution to a co-precipitation reactor to oxide the metal, obtaining the metal oxide particle by mixing lithium raw material, doping raw material, and boron compound and then sintering the same, and disintegrating the sintered lithium metal oxide and then washing it with water.

The step of preparing a metal salt aqueous solution containing nickel raw material, cobalt raw material, manganese raw material, and water and then supplying the metal salt aqueous solution to a co-precipitation reactor to obtain metal oxide can be performed according to the positive electrode active material precursor manufacturing method generally known in the art.

In the positive electrode active material of the present exemplary embodiment, in the step of obtaining lithium metal oxide by sintering, the metal oxide particles, lithium raw material, and doping raw material are mixed, and the lithium raw material is added and mixed in excess. In addition, it is characterized by mixing compounds together with boron.

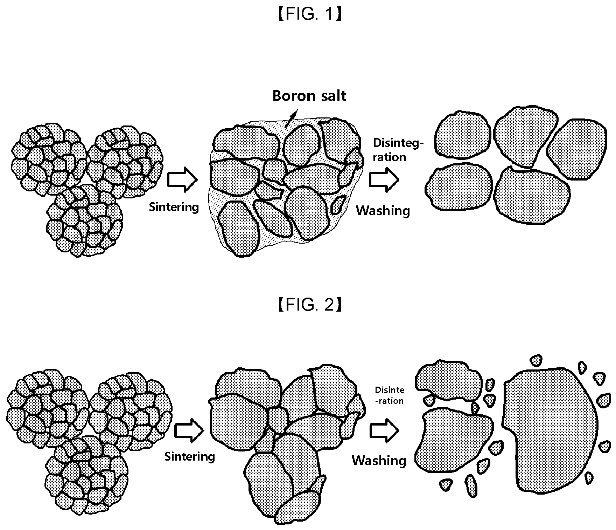

FIG. 1 schematically shows the manufacturing method of a positive electrode active material composed of single particles according to an exemplary embodiment.

Referring to FIG. 1, in the present exemplary embodiment, excessive amounts of lithium raw material and boron compound are added during the manufacturing process of the positive electrode active material, which makes it easy for over-sintering to occur.

Lithium raw material forms a precursor and oxide. At this time, the excessively contained lithium reacts with boron to form lithium borate, a type of boron salt.

In the over-sintering process, the presence of lithium borate during the sintering process between primary particles serves to weaken the bonding force between primary particles. Accordingly, during the disintegration process after sintering, separation between primary particles of increased size, that is, single particles, is easily achieved. Therefore, it is possible to manufacture single particle active material with a low fine and coarse powder ratio, that is, excellent uniformity, even by using general disintegration equipment, without using expensive disintegration equipment or going through multiple disintegration processes.

Since this lithium borate is highly soluble in water, it can be naturally removed along with residual lithium in the water washing process described later.

FIG. 2 schematically shows the manufacturing method of a conventional positive electrode active material composed of single particles.

Referring to FIG. 2, conventionally, primary particles of increased size are difficult to disintegrate due to the increase in cake strength, and even if disintegrated, a large amount of fine and coarse powders are present.

However, when manufacturing a positive electrode active material according to the manufacturing method of the present exemplary embodiment as described above, the disintegration process is easy, so a positive electrode active material composed of single particles with a trace amount of fine and coarse powders can be manufactured.

Specifically, in the step of obtaining the lithium metal oxide, the boron compound can be mixed by adding in range of 0.003 mole to 0.03 mole, or 0.007 mole to 0.028 mole, based on 1 mole of the total of nickel, cobalt, manganese and doping elements in the final positive electrode active material.

In addition, in the step of obtaining the lithium metal oxide, the molar ratio (Li/Me) of lithium (Li) to the entire metal (Me) excluding lithium may be in the 1.01 to 1.1 range, or 1.03 to 1.08 range.

If the input amount of boron compound and Li/Me satisfy the range, lithium and boron can sufficiently react to form lithium borate.

Meanwhile, in the step of obtaining the lithium metal oxide, the sintering can be performed in the range of 820°C to 890°C, or 830°C to 880°C for 10 hours to 24 hours. If the sintering temperature and time conditions satisfy the range, particle growth in the form of single particles occurs.

Next, the sintered lithium metal oxide is disintegrated and then washed with water.

As mentioned above, disintegration can be performed using conventional disintegration equipment. Additionally, the washing step is to remove residual lithium present on the surface and can be performed using, for example, distilled water.

Next, after disintegrating the sintered lithium metal oxide and washing it with water, a step of mixing the washed lithium metal oxide and lithium raw material and performing secondary sintering may be further included.

When going through the secondary sintering step, it has the effect of compensating for the lithium deficiency due to the rock salt structure of the surface generated during the sintering process and the lithium deficiency from proton exchange during the water washing process.

The secondary sintering step can be performed in the range of 730°C to 800°C, or 740°C to 780°C for 3 to 10 hours. If the secondary sintering process satisfies the conditions, the initial resistance can be lowered.

In the secondary sintering step, the mixing amount of the lithium raw material may range from 0.3g to 5g or 1g to 4g based on 100g of the washed lithium metal oxide. If the mixing amount of lithium raw material satisfies the range, the performance of the positive electrode active material can be improved by compensating for the lithium deficiency on the surface.

In another exemplary embodiment, it provides a lithium secondary battery comprising:
a positive electrode including a positive electrode active material according to one embodiment of the present invention, a negative electrode including a negative electrode active material, and an electrolyte positioned between the positive electrode and the negative electrode.

A description related to the positive electrode active material will be omitted because it is the same as that of an exemplary embodiment described above.

The positive electrode active material layer may include a binder and a conductive material.

The binder serves to attach the positive electrode active material particles well to each other and to attach the positive electrode active material to the current collector well.

The conductive material is used to impart conductivity to the electrode, and any electronic conductive material can be used without causing chemical change in the battery.

The negative electrode includes a current collector and a negative electrode active material layer formed on the current collector, and the negative electrode active material layer includes a negative electrode active material.

The negative electrode active material includes a material capable of intercalating/deintercalating lithium ions reversibly, lithium metal, an alloy of lithium metal, a material capable of doping and undoping lithium, or a transition metal oxide.

A material that can intercalate/deintercalate the lithium ion reversibly is a carbon material. In a lithium ion secondary battery, any generally-used carbon-based negative electrode active material can be used, and typical examples thereof are crystalline carbon and amorphous carbon, or combination thereof.

The alloy of the lithium metal is alloy of lithium and metal selected from the group consisting of Na, K, Rb, Cs, Fr, Be, Mg, Ca, Sr, Si, Sb, Pb, In, Zn, Ba, Ra, Ge, Al and Sn.

Materials capable of doping and undoping the lithium include Si, $SiO_x$ ($0 < x < 2$), Si-Y alloy (the Y is an element selected from the group consisting of an alkali metal, an alkaline earth metal, a group 13 element, a group 14 element, a transition metal, and a rare earth, and its combination thereof, but not Si), Sn, $SnO_2$, Sn-Y (the Y is an element selected from the group consisting of an alkali metal, an alkaline earth metal, a group 13 element, a group 14 element, a transition metal, a rare earth element and the combination thereof, not Sn), and the like.

Examples of the transition metal oxide include vanadium oxide and lithium vanadium oxide. The negative electrode active material layer also includes a binder and may optionally further include a conductive material.

The binder serves to attach the negative electrode active material particles well to each other and to attach the negative electrode active material to the current collector well.

The conductive material is used to impart conductivity to the electrode, and any electronic conductive material can be used without causing chemical change in the battery.

As the current collector, one selected from the group consisting of copper foil, nickel foil, stainless steel foil, titanium foil, nickel foam, copper foam, a conductive metal-coated polymer substrate, and a combination thereof may be used.

The negative electrode and positive electrode are prepared by mixing active material, conductive material and binder in a solvent to prepare an active material composition, and applying this composition to a current collector. Since such an electrode manufacturing method is widely known in the field, detailed description will be omitted in this specification. As the solvent, N-methylpyrrolidone and the like can be used, but is not limited thereto.

The electrolyte contains a non-aqueous organic solvent and a lithium salt.

The non-aqueous organic solvent serves as a medium through which ions involved in the electrochemical reaction of the battery can move.

The lithium salt is a material that dissolves in an organic solvent and acts as a supply source of lithium ion in the battery to enable basic operation of the lithium secondary battery and promotes the movement of lithium ion between the positive electrode and the negative electrode.

Depending on the type of lithium secondary battery, a separator may exist between the positive electrode and the negative electrode. As such a separator, polyethylene, polypropylene, polyvinylidene fluoride or a multilayer of two or more of these may be used, and polyethylene/polypropylene 2-layer separator, a mixed multilayer such as a polyethylene/polypropylene/polyethylene 3-layer separator, polypropylene/polyethylene/polypropylene 3-layer separator, can be used.

Lithium secondary batteries can be classified into lithium ion batteries, lithium ion polymer batteries and lithium polymer batteries according to the type of separator and electrolyte used, and can be classified into cylindrical, prismatic, coin-type, and pouch-type depending on the shape. It can be divided into bulk type and thin film type according to size. Since the structures and manufacturing methods of these batteries are well known in this field, detailed descriptions are omitted.

Hereinafter, an exemplary embodiment will be described in detail. However, this is presented as an example, and the present invention is not limited thereby, and the present invention is only defined by the range of claims to be described later.

**exemplary embodiment 1** - **B 0.01 mol Zr 0.0035 mol Al 0.0085 mol**

**(1) Preparation of precursors**

The precursor was prepared using a general co-precipitation method.

Specifically, $NiSO_4 \cdot 6H_2O$ was used as the nickel raw material, $CoSO_4 \cdot 7H_2O$ as the cobalt raw material, and $MnSO_4 \cdot H_2O$ as the manganese raw material. These raw materials were dissolved in distilled water to prepare an aqueous metal salt solution.

After preparing the co-precipitation reactor, $N_2$ was purged to prevent oxidation of metal ions during the co-precipitation reaction, and the reactor temperature was maintained at 50°C.

$NH_4(OH)$ was added as a chelating agent to the co-precipitation reactor, and NaOH was used to adjust pH. The precipitate obtained according to the co-precipitation process was filtered, washed with distilled water, and dried in an oven at 100°C for 24 hours to prepare a positive electrode active material precursor.

The composition of the manufactured precursor was $(Ni_{0.92}Co_{0.04}Mn_{0.04}, OH)_2$, and the average particle size D50 was about $4\mu m$.

**(2) Manufacturing of positive electrode active material**

161g of $LiOH \cdot H_2O$, 2.3g of $H_3BO_3$, 2.45g of $Al(OH)_3$, and 1.59g of $ZrO_2$ were weighed and mixed uniformly with 339g of the precursor prepared in the (1), and the mixture was placed in a box-shaped furnace and then sintered with oxygen inflow at 1,000mL/min. It was sintered at 830-890°C for 24 hours.

At this time, the molar ratio of lithium (Li) to the entire metal (Me) excluding lithium (Li/Me) was designed to be 1.05, and B was added to make it 0.01 mole based on 1 mole of the total of nickel, cobalt, manganese, and doping elements of the final positive electrode active material.

The sintered product was pulverized using an air classifying mill (ACM), washed with water to remove residual lithium on the surface, and then dried for 12 hours.

Next, about 2.3 g of LiOH·H$_2$O (0.053 mol) was mixed per 100 g of the dried positive electrode active material, and heat treatment was performed under an oxygen atmosphere to prepare the positive electrode active material of Exemplary Embodiment 1, which consists of single particles. Heat treatment was performed at 730-800°C for 5 hours.

**Exemplary embodiment 2 to 16**

When manufacturing positive electrode active material, positive electrode active material was manufactured using the same method as exemplary embodiment 1, except that the input amount of boron compound and doping raw material was adjusted in the sintering process as shown in Table 1 below.

**Comparative Example 1**

161 g of LiOH·H$_2$O, 2.45 g of Al(OH)$_3$, and 1.59 g of ZrO$_2$ were weighed and mixed uniformly with 339 g of the precursor prepared in the (1), and the mixture was sintered in a box-shaped furnace with oxygen inflow of 1,000 mL/min. It was sintered at 830-890°C for 24 hours.

At this time, the molar ratio (Li/Me) of lithium (Li) to the entire metal (Me) excluding lithium was designed to be 1.05.

The sintered product was pulverized using an air classifying mill (ACM), washed with water to remove residual lithium on the surface, and then dried for 12 hours.

Next, the dried positive electrode active material was heat treated under an oxygen atmosphere to produce the positive electrode active material of Comparative Example 1, which consists of single particles containing a rock salt structure on the surface. Heat treatment was performed at 730-800°C for 5 hours.

**Comparative Example 2**

A positive electrode active material composed of single particles was manufactured using the same method as exemplary embodiment 1, except that boron compound was not added in the sintering process when manufacturing the positive electrode active material.

**Comparative Example 3**

After preparing the precursor using the same method as (1) in exemplary embodiment 1, 161 g of LiOH·H$_2$O, 2.45 g of Al(OH)$_3$, and 1.59 g of ZrO$_2$ were weighed and mixed uniformly with 339 g of the precursor, and the mixture was sintered in a box-shaped kiln with 1,000 mL/min inflow of oxygen,

It was sintered at 730 - 760°C for 24 hours. At this time, the molar ratio (Li/Me) of lithium (Li) to the entire metal (Me) excluding lithium was designed to be 1.01.

The sintered product was pulverized using an air classifying mill (ACM), washed with water to remove residual lithium on the surface, and then dried for 12 hours.

Next, the positive electrode active material of Comparative Example 2 is composed of secondary particles in the form of aggregated primary particles by mixing about 2.3 g of LiOH·H$_2$O (0.053 mol) per 100 g of dried positive electrode active material and then heat treating it in an oxygen atmosphere. Heat treatment was performed at 730-750°C for 5 hours.

(Table 1)

| Classification | Sintering process | | | |
|---|---|---|---|---|
| | Li/Me ratio | B(mol) | Zr(mol) | Al(mol) |
| exemplary embodiment1 | 1.05 | 0.01 | 0.0035 | 0.0085 |
| exemplary embodiment2 | 1.05 | 0.01 | 0.003 | 0.0085 |
| exemplary embodiments | 1.05 | 0.01 | 0.002 | 0.0085 |
| Reference example 1 | 1.05 | 0.01 | 0.0015 | 0.0085 |
| exemplary embodiment4 | 1.05 | 0.01 | 0.005 | 0.0085 |
| Reference example 2 | 1.05 | 0.01 | 0.0065 | 0.0085 |

(continued)

| Classification | Sintering process | | | |
|---|---|---|---|---|
| | Li/Me ratio | B(mol) | Zr(mol) | Al(mol) |
| exemplary embodiment5 | 1.05 | 0.01 | 0.0035 | 0.015 |
| exemplary embodiment6 | 1.05 | 0.01 | 0.0035 | 0.025 |
| Reference example 3 | 1.05 | 0.01 | 0.0035 | 0.03 |
| exemplary embodiment7 | 1.05 | 0.01 | 0.0035 | 0.0055 |
| Reference example 4 | 1.05 | 0.01 | 0.0035 | 0.003 |
| exemplary embodiment8 | 1.05 | 0.007 | 0.0035 | 0.0085 |
| Reference example 5 | 1.05 | 0.003 | 0.0035 | 0.0085 |
| exemplary embodiment9 | 1.05 | 0.015 | 0.0035 | 0.0085 |
| exemplary embodiment10 | 1.05 | 0.02 | 0.0035 | 0.0085 |
| Reference example 6 | 1.05 | 0.03 | 0.0035 | 0.0085 |
| Comparative Example1 | 1.05 | - | 0.0035 | 0.0085 |
| Comparative Example2 | 1.05 | - | 0.0035 | 0.0085 |
| Comparative Example3 | 1.01 | - | 0.0035 | 0.0085 |

**Experimental Example 1 - Measurement of particle size distribution**

For the positive electrode active material manufactured according to Exemplary Embodiments 1 to 10, Reference Examples 1 to 6, and Comparative Examples 1 to 3, the particle size distribution was measured using particle size measurement equipment (Particle Size Analyzer). The results are shown in Table 2 below.

(Table 2)

| Classification | D50 ($\mu$m) | 2$\mu$m or less particle ratio(%) | 10$\mu$m) or more particle ratio(%) |
|---|---|---|---|
| exemplary embodiment1 | 4.32 | 0.72 | 0.85 |
| exemplary embodiment2 | 4.55 | 0.75 | 0.92 |
| exemplary embodiment3 | 4.51 | 0.82 | 0.89 |
| Reference example 1 | 4.56 | 0.88 | 0.88 |
| exemplary embodiment4 | 4.57 | 0.77 | 0.92 |
| Reference example 2 | 450 | 0.88 | 0.93 |
| exemplary embodiment5 | 4.51 | 0.85 | 0.92 |
| exemplary embodiment6 | 4.55 | 0.77 | 0.99 |
| Reference example 3 | 4.62 | 0.82 | 1.02 |
| exemplary embodiment7 | 4.36 | 0.78 | 0.89 |
| Reference example 4 | 4.29 | 0.92 | 1.01 |
| exemplary embodiment8 | 4.78 | 0.85 | 2.55 |
| Reference example 5 | 5.32 | 1.34 | 2.76 |
| exemplary embodiment9 | 4.56 | 0.66 | 0.74 |
| exemplary embodiment10 | 4.67 | 0.54 | 0.52 |
| Reference example 6 | 4.66 | 0.52 | 0.41 |
| Comparative Example1 | 5.82 | 2.15 | 4.44 |

(continued)

| Classification | D50 ($\mu$m) | 2$\mu$m or less particle ratio(%) | 10$\mu$m) or more particle ratio(%) |
|---|---|---|---|
| Comparative Example2 | 5.85 | 2.62 | 4.65 |
| Comparative Example3 | 4.84 | 1.77 | 2.56 |

Referring to Table 2, in the case of exemplary embodiments 1 to 10, which introduced a boron compound along with an excessive amount of lithium raw material during sintering, it can be seen that the particle size distribution of the manufactured positive electrode active material was very uniform.

On the other hand, it can be seen that the positive electrode active materials of Comparative Examples 1 and 2, which do not use boron compounds, have a very high ratio of fine and coarse powders compared to exemplary embodiments.

When referring to the results in Table 2, it can be seen that the boron added during sintering has a very large effect on the positive electrode active material particle uniformity.

**Experimental Example 2 - SEM Analysis**

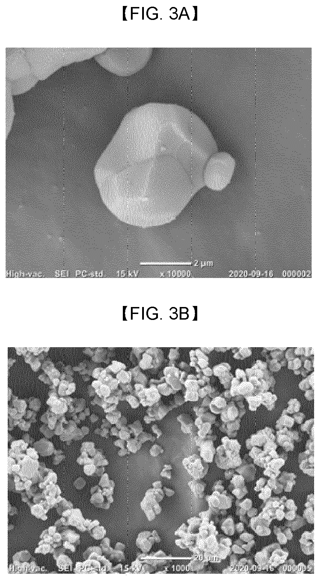

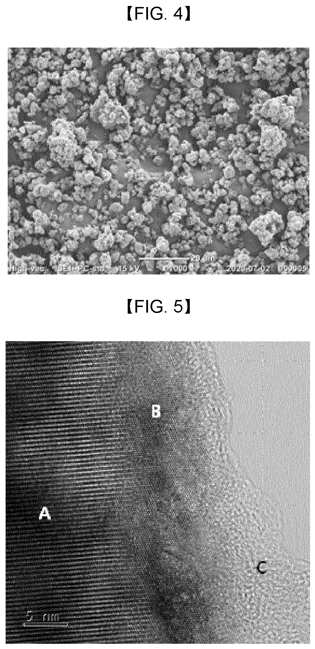

SEM analysis was performed on the positive electrode active material manufactured according to Exemplary Embodiment 1 and Comparative Example 2 as shown in FIG. 3A, FIG. 3B and FIG. 4.

FIG. 3A is the SEM analysis result measured at x10,000 times for the positive electrode active material of exemplary embodiment 1. FIG. 3B is the SEM analysis result measured at x1,000 times.

FIG. 4 is the SEM analysis result measured at x1,000 times for the positive electrode active material of Comparative Example 2.

Referring to FIG. 3A, it can be seen that the positive electrode active material manufactured according to exemplary embodiment 1 is composed of one particle, that is, a single particle. Additionally, Referring to FIG. 3B, you can see that the single particle shape is uniform, and its size is also very uniform, without fine and coarse particles. In contrast, Referring to FIG. 4, it can be seen that there are relatively more fine and coarse particles compared to FIG. 3B.

Like the present exemplary embodiment, a positive electrode active material with excellent particle size uniformity, that is, containing almost no fines and coarse particles, can be used as a positive electrode active material in a bimodal form in the future.

When manufacturing an electrode using this bimodal positive electrode active material, the energy density can be increased by improving the rolling rate of the electrode.

**Experimental Example 3 - Particle characteristic evaluation**

**(1) Specific surface area measurement**

The specific surface area was measured for the positive electrode active material manufactured in the exemplary embodiment and Comparative Example using BET measurement equipment (Micromeritics TriStar II 3020).

**(2) particle intensity measurement**

The particle intensity was measured using particle intensity measurement equipment (Fisherscope HM2000) for the positive electrode active material manufactured in the Exemplary Example and Comparative Example.

**(3) XRD measurements**

For the positive electrode active material manufactured in the Exemplary Embodiment and Comparative Example, X-ray diffraction measurements were performed using CuK$\alpha$ rays.

XRD equipment (Panalytical's X'pert3 powder diffraction) was used to measure the intensity (peak area) of (003) and (104) planes and the intensity of (110) planes at a scan speed (°/s) of 0.328. From this result, I(003)/I(104) was obtained and shown in Table 3 below.

In addition, the R-factor was calculated from the strength measurement results of the (006) side, (102) side, and (101) side according to Equation 1 below.

[Equation 1]

$$\text{R-factor} = \{I(006) + I(102)\} / I(101)$$

The crystalline size of the positive electrode active material was measured.

(Table 3)

| Classification | D50 ($\mu$m) | Crystalline size (Å) | I(003)/I(104) | R-factor | BET (m²/g) | Particle strength (MPa) |
|---|---|---|---|---|---|---|
| exemplary embodiment1 | 4.32 | 3,835 | 1.16 | 0.462 | 0.65 | 320 |
| exemplary embodiment2 | 4.55 | 3,756 | 1.16 | 0.461 | 0.67 | 324 |
| exemplary embodiment3 | 4.51 | 3.777 | 1.15 | 0.456 | 0.67 | 323 |
| Reference example 1 | 4.56 | 3,753 | 1.16 | 0.464 | 0.70 | 325 |
| exemplary embodiment4 | 4.57 | 3,854 | 1.16 | 0.464 | 0.65 | 320 |
| Reference example 2 | 4.50 | 3,898 | 1.15 | 0.463 | 0.65 | 330 |
| exemplary embodiment5 | 4.51 | 3,840 | 1.16 | 0.456 | 0.67 | 320 |
| exemplary embodiment6 | 4.55 | 2,915 | 1.15 | 0.453 | 0.70 | 319 |
| Reference example 3 | 4.62 | 2,658 | 1.14 | 0.456 | 1.20 | 317 |
| exemplary embodiment7 | 4.36 | 4,124 | 1.17 | 0.458 | 0.65 | 340 |
| Reference example 4 | 4.29 | 4,335 | 1.18 | 0.461 | 0.63 | 342 |
| exemplary embodiment8 | 4.78 | 3,888 | 1.16 | 0.461 | 0.65 | 315 |
| Reference example 5 | 5.32 | 3,945 | 1.15 | 0.462 | 0.67 | 300 |
| exemplary embodiment9 | 4.56 | 3,742 | 1.16 | 0.461 | 0.65 | 35 |
| exemplary embodiment10 | 4.67 | 3,436 | 1.17 | 0.464 | 0.63 | 330 |
| Reference example 6 | 4.66 | 3,138 | 1.17 | 0.463 | 0.64 | 340 |
| Comparative Example1 | 5.82 | 2,330 | 1.16 | 0.488 | 1.12 | 290 |
| Comparative Example2 | 5.85 | 2,350 | 1.18 | 0.482 | 1.15 | 290 |
| Comparative Example3 | 4.84 | 1,100 | 1.18 | 0.492 | 1.55 | 120.4 |

Referring to Table 3, it can be seen that the average grain size of the positive electrode active material of exemplary embodiments 1 to 10 is at least 2500 Å, which is greatly increased overall compared to Comparative Examples 1 to 3. This means that crystallization proceeded better at the same sintering temperature. In this way, when the positive electrode active material of the exemplary embodiment with well-crystallization is applied to a lithium secondary battery, the cycle-life characteristic of the battery can be improved and residual lithium can be reduced, which is very advantageous.

In addition, it can be seen that the specific surface area (BET) of exemplary embodiments 1 to 10 is less than 0.70 m²/g, which is significantly reduced compared to Comparative Example 3 manufactured in the form of secondary particles. As such, the positive electrode active material of the present exemplary embodiment has a very low BET value and can significantly deteriorate the amount of gas generated during cell charging and discharge, which has a very advantageous effect.

Next, it can be seen that the particle intensity of the positive electrode active material according to exemplary embodiments 1 to 10 is more than 291 MPa, which is increased compared to Comparative Examples 1 to 3. Particularly, it increased by more than 2.5 times compared to Comparative Example 3 manufactured in the form of secondary particles. In this way, when a lithium secondary battery is implemented using a positive electrode active material with excellent particle strength, the rolling rate of the electrode can be improved, and thus the energy density of the battery can be increased.

**Experimental Example 4 - Electrochemical Evaluation**

**(1) coin-type half-cell fabrication**

After manufacturing a CR2032 coin cell using the positive electrode active material manufactured as described above, an electrochemical evaluation was conducted.

Positive electrode active material, Denka black conductive material, and polyvinylidene fluoride binder (trade name: KF1120) were mixed at a weight ratio of 96.5:1.5:2, and this mixture was added to N-Methyl-2-pyrrolidone solvent to have a solid content of about 30 wt% to prepare a positive electrode active material slurry.

The slurry was coated on aluminum foil (Al foil, thickness: 15 $\mu$m), which is a positive electrode current collector, using a doctor blade (Doctor blade), dried, and rolled to prepare a positive electrode. The loading amount of the positive electrode was 15 mg/cm$^2$, and the rolling density was 3.4 g/cm$^3$.

A 2032 coin-type half cell was prepared by a conventional method using the positive electrode, lithium metal negative electrode (300$\mu$m, MTI), electrolyte solution and polypropylene separator. The electrolyte solution is the product obtained by dissolving 1M $LiPF_6$ in a mixed solvent of ethylene carbonate (EC), dimethyl carbonate (DMC) and ethylmethyl carbonate (EMC) (mixing ratio EC:DMC:EMC=3:4:3 volume ratio), and 3 wt% of vinylene carbonate was added to 100 wt% of the entire solution.

**(2) Evaluation of charge and discharge characteristics**

After aging the prepared coin-type half cell at room temperature 25 °C for 10 hours, charging and discharging were performed.

The capacity evaluation was based on 205mAh/g, and the charge and discharge conditions were constant current (CC) / constant voltage (CV) 2.5V to 4.25V, and 1/20C cut-off. For initial capacity, discharge capacity was measured after 0.1C charge/0.1C discharge, and initial efficiency was calculated after 0.2C charge/0.2C discharge, and the results are shown in Table 4 below.

**(3) Cycle-life characteristic measurement**

The high temperature cycle life characteristic was measured 30 times under 0.3C charge/0.3C discharge condition at high temperature 45°C.

**(4) Resistance characteristic measurement**

The room temperature initial resistance (DC internal resistance: Direct current internal resistance (DC-IR)) is the constant current-constant voltage 2.5V to 4.25V at 25°C, 1/20C cut-off condition, 0.2C charging and 0.2 discharge discharge was performed once, and the voltage value was measured 60 seconds after applying the discharge current at 4.25V charge 100%, and then it was calculated.

The resistance increase rate is measured in the same way as the initial resistance measurement method after 30 cycle compared to the resistance initially measured at high temperature 45°C (high temperature initial resistance), and the increase rate is converted into percentage (%).

**(5) Thermal stability evaluation**

In the differential scanning calorimetry (DSC) analysis, after charging the half cell from the initial 0.1C charging condition to 4.25V, the half cell is disassembled to obtain only the positive electrode separately, and the positive electrode is washed 5 times with dimethyl carbonate. After impregnation of the positive electrode washed in the crucible for DSC with electrolyte solution, while raising the temperature, the DSC peak temperature and calorific value result obtained by measuring the caloric change using Mettler Toledo's DSC1 star system as a DSC device.

(Table 4)

| Classification | room temperature resistance (Ω) | High temperature resistance increase rate (%) | 0.1 C discharge capacity (mAh/g) | 2C/ 0.1C (%) | cycle-life (%) | DSC (°C) |
|---|---|---|---|---|---|---|
| exemplary embodiment1 | 28.1 | 66.2 | 203.3 | 90.1 | 95.4 | 230 |
| exemplary embodiment2 | 28.3 | 66.8 | 203.4 | 90 | 95.3 | 230 |
| exemplary embodiment3 | 28.3 | 67.7 | 203.7 | 90.2 | 95.2 | 230 |
| Reference example 1 | 28.1 | 70.4 | 203.9 | 90.1 | 93.2 | 230 |
| exemplary embodiment4 | 28 | 65.2 | 201.4 | 89.9 | 95.3 | 230 |
| Reference example 2 | 28.5 | 64.1 | 195.3 | 89.8 | 95.3 | 230 |
| exemplary embodiment5 | 28.8 | 66.2 | 203.1 | 90.2 | 95.3 | 231 |
| exemplary embodiment6 | 29.1 | 65.5 | 202.5 | 90.1 | 95.2 | 232 |
| Reference example 3 | 29.1 | 62.1 | 197.1 | 90.1 | 95.4 | 234 |
| exemplary embodiment7 | 27.7 | 66.3 | 203.3 | 89.8 | 94.7 | 228 |
| Reference example 4 | 26.6 | 67.1 | 203.6 | 89.6 | 94.1 | 226 |
| exemplary embodiment8 | 28.2 | 66.4 | 204.2 | 89.9 | 95.2 | 229 |
| Reference example 5 | 29.5 | 67.3 | 203.7 | 89.5 | 95.1 | 230 |
| exemplary embodiment9 | 27.5 | 66.2 | 203.1 | 90.1 | 95.0 | 230 |
| exemplary embodiment10 | 25.1 | 62.1 | 201.4 | 90.0 | 95.2 | 231 |
| Reference example 6 | 23.4 | 56.3 | 195.2 | 89.8 | 95.1 | 230 |
| Comparative Example1 | 38.2 | 98.1 | 203.3 | 89.9 | 93.3 | 230 |
| Comparative Example2 | 33.1 | 98.1 | 204.4 | 88.3 | 87.3 | 230 |
| Comparative Example3 | 25.3 | 138.3 | 212.5 | 87.8 | 85.2 | 230 |

Table 4 shows the results of evaluating the measured electrochemical characteristics of the positive electrode active material manufactured by changing the mixing amount of boron compound and doping raw material during firing.
Referring to Table 4, it can be seen that in the case of Reference Example 1 in which a small amount of Zr is doped, the high temperature resistance increase rate increases and the cycle-life characteristic is deteriorated. In addition, in the case of Reference Example 2 in which Zr is excessively doped, it can be seen that the initial capacitance is deteriorated.

In the case of Reference Example 3 in which Al is excessively doped, it can be seen that the initial capacity is deteriorated. In the case of Reference Example 4 in which a small amount of Al is doped, it can be seen that the cycle-life characteristic is deteriorated and the thermal stability is reduced.

Additionally, in the case of Reference Example 6, in which an excessive amount of B was introduced during the manufacturing process, it can be seen that the initial capacity was deteriorated.

Meanwhile, Comparative Example 1 shows that the initial resistance and resistance increase rate significantly increase.

In addition, Comparative Example 2 shows that the initial resistance, cycle-life, and resistance increase rate are overall inferior to those of exemplary embodiments. In addition, it can be seen that the positive electrode active material of Comparative Example 3, which is manufactured in the form of secondary particles in which primary particles are agglomerated, that is, polycrystalline, has a very high resistance increase rate.

**Experimental Example 5 - Positive electrode active material structure analysis**

For the positive electrode active material manufactured according to exemplary embodiment 1, images were measured using HRTEM (high resolution transmission electron microscope) equipment, and the results were shown in FIG. 5.

Referring to FIG. 5, it can be seen that the center of the positive electrode active material is divided into area A, and the surface area is divided into areas B and C.

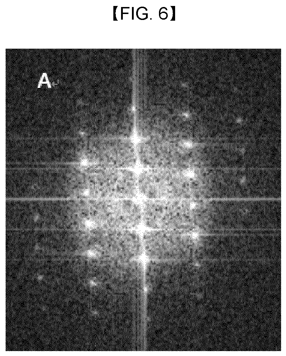

In the image in FIG. 5, an image of the diffraction pattern was obtained by performing FFT (Fast Fourier transform) transformation on areas A, B, and C, and the result is shown in FIG. 6 to FIG. 8.

Referring to FIG. 6, it can be seen that a layered structure (Rhombohedral, a=b=0.28831nm, c=1.41991nm) of the R-3m structure typical of $LiNiO_2$ (85-1966) is formed in the center of the positive electrode active material.

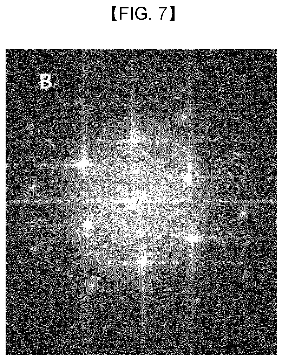

Referring to FIG. 7, it can be seen that a Fm-3m rock salt structure (Cubic, a=b=c=0.83532nm) of NiO (89-5881) with a thickness of approximately 5-10nm is formed.

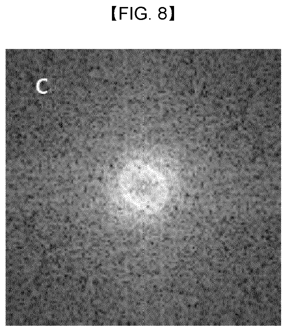

Referring to FIG. 8, it can be seen that an amorphous structure exists in the C region.

That is, it can be confirmed that the center of the positive electrode active material manufactured according to Exemplary Embodiment 1 includes a layered structure, and the surface portion includes an amorphous structure and a rock salt structure.

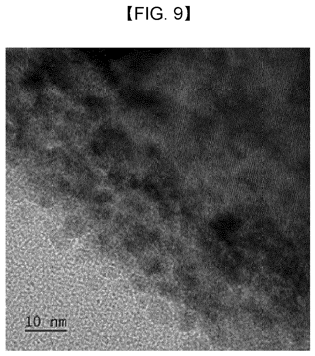

Next, images of the positive electrode active material manufactured according to Comparative Example 1 were measured using HRTEM (High resolution transmission electron microscope) equipment, and the results are shown in FIG. 9.

Referring to FIG. 9, it can be seen that the center of the positive electrode active material is divided into area A, and the surface area is divided into area B.

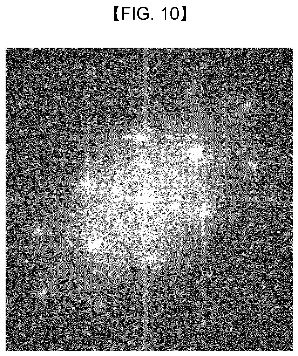

In the image in FIG. 9, an image of the diffraction pattern was obtained by performing FFT (Fast Fourier transform) transformation on areas A and B, and the result is shown in FIG. 10 and FIG. 11.

Referring to FIG. 10, it can be seen that a layered structure (Rhombohedral, a=b=0.28831nm, c=1.41991nm) of R-3m structure is formed in the center of the positive electrode active material of Comparative Example 1. Referring to FIG. 11, it can be seen that a rock salt structure (Cubic, a=b=c=0.83532nm) is formed on the positive electrode active material surface portion of Comparative Example 11.

**Experimental Example 6 - EDS analysis of particle internal components**

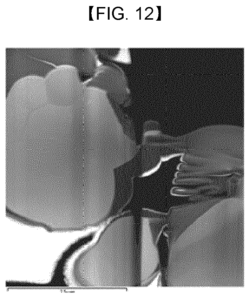

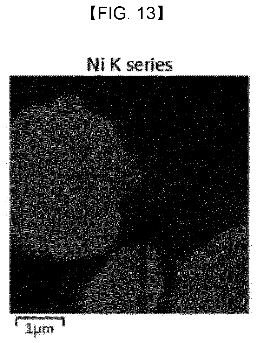

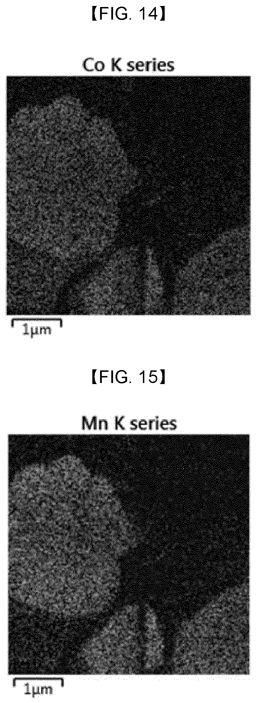

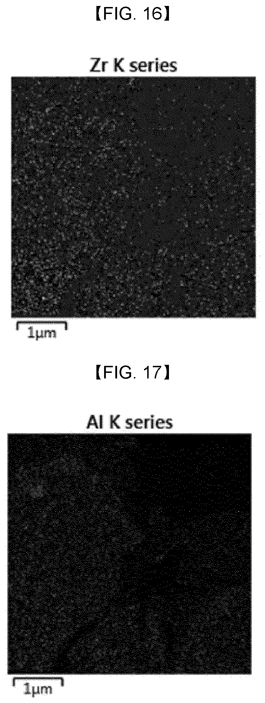

FIG. 12 shows a cross-section image of the positive electrode active material manufactured in exemplary embodiment 1 after milling with a FIB (Focused Ion Beam, SEIKO 3050SE). Next, in order to confirm the elements, present inside the positive electrode active material, analysis was performed using EDS (Energy dispersed spectroscopy, Oxford X_max 100TLE) analysis equipment, and the results are shown in FIG. 13 to FIG. 17.

Referring to FIG. 13 to FIG. 17, it can be seen that Ni, Co, Mn, and Zr and Al introduced as doping elements are uniformly distributed inside the positive electrode active material of exemplary embodiment 1 composed of single particles. However, B was not observed inside the positive electrode active material according to element mapping.

**Experimental Example 7 - Lithium analysis using EELS for particle cross-section**

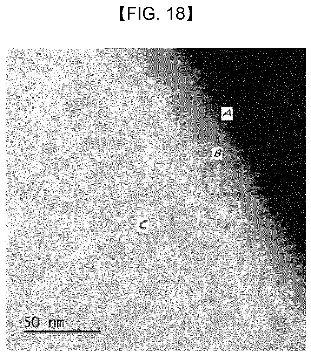

The cross-section of the positive electrode active material manufactured in exemplary embodiment 1 was cut with a FIB (Focused Ion Beam, SEIKO 3050SE), and the cross-section analyzed with STEM (Scanning Transmission Electron Microscopy, JEOL ARM 200F) analysis equipment is shown in FIG. 18.

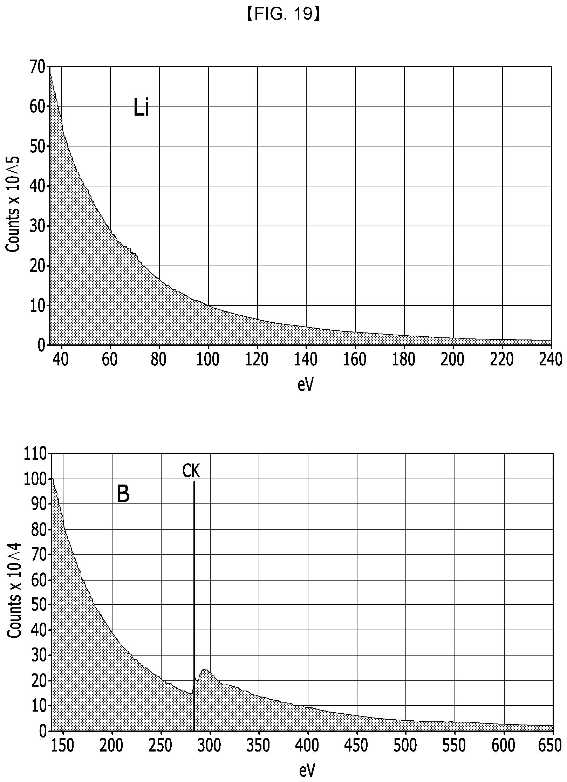

Next, to confirm the presence or absence of Li and B, FIG. For areas A, B, and C shown in FIG. 18, the results analyzed using EELS (Electron Energy Loss Spectroscopy, GATAN GIF Quantum ER 965) equipment are shown in FIG. 19 to FIG. 21.

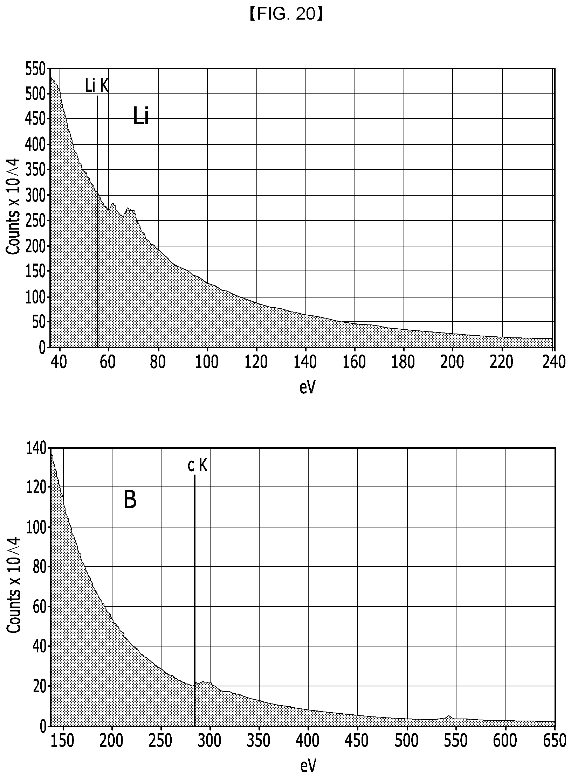

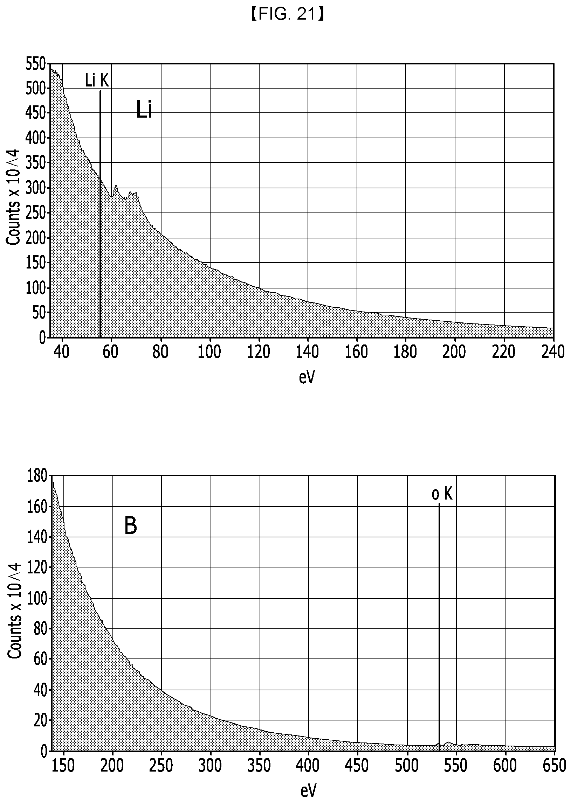

FIG. 19 is the analysis result for area A. FIG. 20 is the analysis result for area B. FIG. 21 is the analysis result for area C.

The area marked A in FIG. 18 is a carbon coating layer for FIB measurement and does not correspond to the positive electrode active material. Therefore, referring to FIG. 19, you can see that neither Li nor B was observed, and only C (carbon) was observed.

Additionally, referring to FIG. 20, Li and C were observed in the positive electrode active material surface area of exemplary embodiment 1, but B was not observed.

When referring to the element mapping result in FIG. 20 and FIG. 13 to FIG. 17., it can be seen that amorphous lithium and carbon are positioned in some areas of the positive electrode active material surface area composed of single particles.

Additionally, referring to FIG. 21, you can see that lithium and oxygen are analyzed. In other words, it can be seen that lithium metal oxide containing a layered structure exists in the center of the single particle.

The present invention is not limited to the exemplary embodiments, but can be manufactured in a variety of different forms, and in the technical field to which the present invention belongs, a person of an ordinary skill can do so without changing the technical idea or essential features of the present invention. It will be understood that it can be implemented in other specific forms. Therefore, the exemplary embodiments described above should be understood in all respects as illustrative and not limiting.

**Claims**

1. A positive electrode active material, comprising:

   a metal oxide particle containing a center portion and a surface portion positioned on the surface of the center portion,
   wherein, the metal oxide particle includes nickel, cobalt, manganese and doping elements and is composed of a single particle, and,
   the doping elements are Zr and Al.

2. The positive electrode active material of claim 1, wherein:
   a content of the doping element ranges from 0.0005 mole to 0.04 mole, based on 1 mole of the total of the nickel, cobalt, manganese and doping elements.

3. The positive electrode active material of claim 1, wherein:
   a content of the Zr ranges from 0.001 mole to 0.01 mole, based on 1 mole of the total of the nickel, cobalt, manganese and doping elements.

4. The positive electrode active material of claim 1, wherein:
   a content of the Al ranges from 0.001 mole to 0.04 mole, based on 1 mole of the total of the nickel, cobalt, manganese and doping elements.

5. The positive electrode active material of claim 1, wherein:
   a content of nickel in the metal oxide particle is 0.8 mol or more, based on 1 mole of the total of the nickel, cobalt, and manganese.

6. The positive electrode active material of claim 1, wherein:
   the surface portion contains a film for which no peak is observed during XRD measurement.

7. The positive electrode active material of claim 6, wherein:
   the film contains a compound with an amorphous structure.

8. The positive electrode active material of claim 7, wherein:
   the amorphous structure of the compound contains carbon and lithium.

9. The positive electrode active material of claim 1, wherein:
   The surface portion contains an amorphous structure and a rock salt structure.

**10.** The positive electrode active material of claim 1, wherein:
the center portion contains a layered structure.

**11.** The positive electrode active material of claim 1, wherein:
a particle strength of the metal oxide particle is more than 291MPa.

**12.** The positive electrode active material of claim 1, wherein:
a grain size of the metal oxide particle ranges from 2,500 Å to 5,000 Å.

**13.** The positive electrode active material of claim 1, wherein:
a specific surface area (BET) of the metal oxide particle is less than 0.70 m$^2$/g.

**14.** The positive electrode active material of claim 1, wherein:
based on the entire positive electrode active material, the ratio of particles with an average particle size of 2 $\mu$m or less is less than 2.5%.

**15.** The positive electrode active material of claim 1, wherein:
based on the entire positive electrode active material, the ratio of particles with an average particle size of 10 $\mu$m or more is less than 3%.

**16.** The positive electrode active material of claim 1, wherein:
D50 particle size of the metal oxide particle is less than 5.5$\mu$m.

【FIG. 1】

Boron salt

Sintering

Disinteg-
ration

Washing

【FIG. 2】

Sintering

Disinte
-ration

Washing

【FIG. 3A】

【FIG. 3B】

【FIG. 4】

【FIG. 5】

【FIG. 6】

【FIG. 7】

【FIG. 8】

【FIG. 9】

【FIG. 10】

【FIG. 12】

【FIG. 13】

Ni K series

1μm

【FIG. 14】

Co K series

1μm

【FIG. 15】

Mn K series

1μm

【FIG. 16】

Zr K series

1μm

【FIG. 17】

Al K series

1μm

【FIG. 18】

【FIG. 19】

【FIG. 20】

【FIG. 21】

## INTERNATIONAL SEARCH REPORT

| | International application No. |
|---|---|
| | **PCT/KR2022/004548** |

**A. CLASSIFICATION OF SUBJECT MATTER**

**H01M 4/525**(2010.01)i; **H01M 4/505**(2010.01)i; **H01M 4/36**(2006.01)i; **H01M 4/62**(2006.01)i; **H01M 10/052**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/525(2010.01); H01M 10/052(2010.01); H01M 10/0525(2010.01); H01M 4/36(2006.01); H01M 4/485(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 중심부 (core), 표면부 (shell), 도핑 (doping), 단입자 (monolithic), 양극 활물질 (cathode active materials), 비정질 (non-crystalline, amorphous)

**C. DOCUMENTS CONSIDERED TO BE RELEVANT**

| Category* | Citation of document, with indication, where appropriate, of the relevant passages | Relevant to claim No. |
|---|---|---|
| X | KR 10-2019-0139033 A (LG CHEM, LTD.) 17 December 2019 (2019-12-17)<br>See abstract; paragraphs [0028], [0031], [0044], [0049]-[0052], [0056] and [0064]; and claims 1, 11 and 16. | 1-5,10-16 |
| A | | 6-9 |
| A | WO 2020-238968 A1 (BYD COMPANY LIMITED) 03 December 2020 (2020-12-03)<br>See entire document. | 1-16 |
| A | KR 10-2017-0063408 A (LG CHEM, LTD.) 08 June 2017 (2017-06-08)<br>See entire document. | 1-16 |
| A | KR 10-2015-0089388 A (SAMSUNG SDI CO., LTD.) 05 August 2015 (2015-08-05)<br>See entire document. | 1-16 |
| A | KR 10-2018470 B1 (UMICORE et al.) 04 September 2019 (2019-09-04)<br>See entire document. | 1-16 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **01 July 2022** | **01 July 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2022/004548**

| Patent document cited in search report | | | Publication date (day/month/year) | Patent family member(s) | | | Publication date (day/month/year) |
|---|---|---|---|---|---|---|---|
| KR | 10-2019-0139033 | A | 17 December 2019 | CN | 111742431 | A | 02 October 2020 |
| | | | | EP | 3742533 | A1 | 25 November 2020 |
| | | | | EP | 3742533 | A4 | 09 June 2021 |
| | | | | JP | 2021-514524 | A | 10 June 2021 |
| | | | | KR | 10-2288292 | B1 | 10 August 2021 |
| | | | | US | 2021-0005875 | A1 | 07 January 2021 |
| | | | | WO | 2019-235885 | A1 | 12 December 2019 |
| WO | 2020-238968 | A1 | 03 December 2020 | CN | 112018335 | A | 01 December 2020 |
| | | | | EP | 3965188 | A1 | 09 March 2022 |
| | | | | KR | 10-2022-0009443 | A | 24 January 2022 |
| KR | 10-2017-0063408 | A | 08 June 2017 | CN | 108140829 | A | 08 June 2018 |
| | | | | CN | 108140829 | B | 18 June 2021 |
| | | | | EP | 3386015 | A1 | 10 October 2018 |
| | | | | EP | 3386015 | A4 | 05 December 2018 |
| | | | | JP | 2018-532236 | A | 01 November 2018 |
| | | | | KR | 10-1989399 | B1 | 17 June 2019 |
| | | | | US | 11081694 | B2 | 03 August 2021 |
| | | | | US | 2018-0261842 | A1 | 13 September 2018 |
| | | | | US | 2021-0313573 | A1 | 07 October 2021 |
| | | | | WO | 2017-095153 | A1 | 08 June 2017 |
| KR | 10-2015-0089388 | A | 05 August 2015 | KR | 10-2119156 | B1 | 04 June 2020 |
| | | | | US | 10535869 | B2 | 14 January 2020 |
| | | | | US | 2015-0214543 | A1 | 30 July 2015 |
| KR | 10-2018470 | B1 | 04 September 2019 | CN | 108028371 | A | 11 May 2018 |
| | | | | CN | 108028371 | B | 25 August 2020 |
| | | | | EP | 3326226 | A1 | 30 May 2018 |
| | | | | EP | 3326226 | A4 | 20 February 2019 |
| | | | | EP | 3326226 | B1 | 12 February 2020 |
| | | | | HU | E048943 | T2 | 28 August 2020 |
| | | | | JP | 2018-523892 | A | 23 August 2018 |
| | | | | JP | 6694054 | B2 | 13 May 2020 |
| | | | | KR | 10-2018-0029254 | A | 20 March 2018 |
| | | | | PL | 3326226 | T3 | 27 July 2020 |
| | | | | TW | 201712928 | A | 01 April 2017 |
| | | | | TW | I623136 | B | 01 May 2018 |
| | | | | US | 10333135 | B2 | 25 June 2019 |
| | | | | US | 2018-0226631 | A1 | 09 August 2018 |
| | | | | WO | 2017-013520 | A1 | 26 January 2017 |

Form PCT/ISA/210 (patent family annex) (July 2019)